# EUROPEAN PATENT APPLICATION

(11) **EP 2 447 856 A1**
(43) Date of publication of application: **02.05.2012**
(21) Application number: 10791530.8
(22) Date of filing: 22.06.2010
(51) Int. Cl.: G06F 17/30

(54) **UPDATE NOTIFICATION METHOD AND BROWSER**

(30) Priority: 23.06.2009 CN 200910087502
(71) Applicant: Beijing Sogou Technology Development Co., Ltd., Beijing 100084 (CN)
(72) Inventor: ZHOU, Dakui, Beijing 100084 (CN); GAO, Zhi, Beijing 100084 (CN)
(74) Representative: Detken, Andreas
(86) International application number: PCT/CN2010/074235
(87) International publication number: WO 2010/149024

(57) **Abstract**

An update notification method and browser. The method includes: the browser monitors network resource dynamically (101); if the update of the network resource is found, the method will notify the user in a preset update notification manner (102). As the update notification method monitors the web page directly via the browser, it is able to monitor various kinds of network resources dynamically including the web page that do not support RSS output, and when the update of the network resource is found, the method will notify the user initiatively and timely in multiple manners.

## Description

This application claims the priority of Chinese Patent Application No. 200910087502.1, filed on June 23, 2009, in the Chinese Patent Office, entitled "Update Notification Method and Browser," the entire contents of which are incorporated herein by reference.

### Technology Field

The present invention relates to the field of Internet technologies and, more particularly, to an update notification method and browser.

### Background

With the popularity of the Internet, people are more and more used to obtaining information and searching documents through the Internet. Although there are a huge variety of portal websites becoming operational, it is rather time consuming to switch back and forth between various websites. The search engines may help us to search for anything we want, however, it is burdensome to perform proper searches. Now there is a new information format on the Internet, which is called RSS (Rich Site Summary or Really Simple Syndication). The RSS is an XML-format standard for users to share news headlines and other Web contents, and is also a widely-used content packaging and delivery protocol on the Internet. Using RSS syndicate software tools, Internet users can read contents from websites supporting the RSS output at the client side.

The Internet today has a massive number of websites, and the time when each website is updated is unpredictable. One way is that, through the favorites-folder feature of existing conventional browsers, such as the IE browser, a user can store webpage links of those web pages that are interested by the user. Thus, next time when the user is browsing the Internet, the user can go directly to the favorites folder to search the stored webpage links, and further can click a link to read updated contents of a corresponding webpage. The other way is that, through a client-side RSS reader, the user can subscribe those web pages that are interested by the user. When one or more websites have updated contents, the client-side RSS reader can automatically update an RSS list regularly, and also update titles of the websites in the RSS folder for the user to follow links and read contents. The user can also manually update the RSS list after starting the client-side RSS reader, and then search the RSS list for titles of updated websites to follow the links and read the contents.

However, to the best knowledge of the applicants, although the favorites-folder feature provided by one of the ways can be used with any web pages, the web pages stored in the favorites folder cannot be dynamically monitored; neither can a user be notified to visit a web page after the webpage has been updated. Further, the client-side RSS reader software provided by the other way can only dynamically monitor those web pages supporting RSS output and often with very limited functionalities.

### Contents of Invention

The present invention provides an update notification method and related browser, capable of dynamically monitoring a variety of network resources, including the ones not supporting RSS output, and notifying users actively and timely through multiple ways after the monitored network resources are updated.

To achieve this objective, the present invention provides the following aspects:

An update notification method, including:
dynamically monitoring network resources by a browser;
when there is an update in any of the network resources, notifying a user according to a preset update notification means.

Preferably, dynamically monitoring the network resources includes:
dynamically monitoring update information of the network resources by the browser through taking consecutive snapshots of a same network resource and comparing contents of the consecutive snapshots.

Preferably, taking consecutive snapshots of the same network resource includes:
taking the consecutive snapshots of the same network resource periodically based on a preset time interval; and/or
taking the consecutive snapshots of the same network resource based on an updating instruction from the user.

Preferably, the updating instruction includes one or more of:
an instruction opening the browser by the user, an instruction closing the browser by the user, and an instruction using the browser by the user.

Preferably, the method further includes:
receiving from the user by the browser a specifying instruction to identify network resources to be dynamically monitored, and/or identifying by the browser automatically network resources to be dynamically monitored based on analysis using preset rules.

Preferably, dynamically monitoring the network resources by the browser includes:
dynamically monitoring update information of network resources that need to be dynamically monitored listed in the browser's favorites folder; and/or
dynamically monitoring the update information of the network resources that need to be dynamically monitored listed in the browser's address bar drop-down list; and/or
dynamically monitoring the update information of the network resources that need to be dynamically monitored pointed to by a web address entered in the browser's address bar.

Preferably, dynamically monitoring the network resources by the browser includes:
dynamically monitoring update information of specific contents of the network resources.

Preferably, when there is an update in any of the network resources, notifying the user according to the preset update notification means includes:
when there is an update in any of the network resources and corresponding update information meets a preset update notification condition, notifying the user according to the preset update notification means.

Preferably, the preset update notification condition includes:
a total number of changed words in a network resource exceeding a certain threshold value, and/or
a changed portion in the network resource containing a picture, and/or
the changed portion in the network resource containing a link, and/or
the changed portion in the network resource containing a key word, and/or
the changed portion in the network resource containing a multi-media file, and/or
the changed portion in the network resource containing a downloadable file.

Preferably, the preset update notification means includes:
update notification means automatically set by the browser, or
update notification means set by the user.

Preferably, the preset update notification means includes:
providing update notification within a browser interface through one or more of a dialog box, a bubble, a label, and an audio; or
providing the update notification within a terminal interface and in an area outside the browser interface through one or more of a dialog box, a bubble, a label, and an audio; or
sending the update notification to a mobile terminal through communication software tools.

And, a browser, including:
a dynamic monitoring module, which is used for dynamically monitoring network resources;
an update notification module, which is used for, when dynamic monitoring module detects updating from the monitored network resources, notifying a user according to a preset update notification means.

Preferably, the dynamic monitoring module dynamically monitors update information of the network resources through taking consecutive snapshots of a same network resource and comparing contents of the consecutive snapshots.

Preferably, taking consecutive snapshots of the same network resource by the dynamic monitoring module includes:
taking the consecutive snapshots of the same network resource periodically based on a preset time interval; and/or
taking the consecutive snapshots of the same network resource based on an updating instruction from the user.

Preferably, the updating instruction includes one or more of:
an instruction opening the browser by the user, an instruction closing the browser by the user, and an instruction using the browser by the user.

Preferably, the dynamic monitoring module further includes:
an identification unit, which is used to identify network resources to be dynamically monitored based on an instruction specifying network resources that need to be dynamically monitored received from the user, and/or to identify the network resources to be monitored based on analysis using preset rules;
the dynamic monitoring module dynamically monitors update information of network resources to be dynamically monitored as identified by the identification unit.

Preferably, the dynamic monitoring module dynamically monitors update information of network resources that need to be dynamically monitored listed in the browser's favorites folder; and/or
dynamically monitors the update information of the network resources that need to be dynamically monitored listed in the browser's address bar drop-down list; and/or
dynamically monitors the update information of the network resources that need to be dynamically monitored pointed to by a web address entered in the browser's address bar.

Preferably, the dynamic monitoring module dynamically monitors update information of specific contents of the network resources.

Preferably, the update notification module includes a first presetting unit used to preset an update notification condition;
when the dynamic monitoring module detects updating from the network resources and corresponding update information meets the update notification condition preset by the first presetting unit, the update notification module notifies the user according to the preset update notification means.

Preferably, the preset update notification condition includes:
a total number of changed words in a network resource exceeding a certain threshold value, and/or
a changed portion in the network resource containing a picture, and/or
the changed portion in the network resource containing a link, and/or
the changed portion in the network resource containing a key word, and/or
the changed portion in the network resource containing a multi-media file, and/or
the changed portion in the network resource containing a downloadable file.

Preferably, the update notification module includes a second presetting unit used to preset an update notification means based on a received user configuration instruction, and/or to preset the update notification means automatically.

Preferably, the preset update notification means includes:
providing update notification within a browser interface through one or more of a dialog box, a bubble, a label, and an audio; or
providing the update notification within a terminal interface and in an area outside the browser interface through one or more of a dialog box, a bubble, a label, and an audio; or
sending the update notification to a mobile terminal through communication software tools.

A computer-readable storage medium, including computer program code, when being executed by a computer unit, instructing the computer unit to:
dynamically monitor network resources;
when there is an update in any of the network resources, notify a user according to a preset update notification means.

In comparison with conventional technologies, advantages of the present invention include:

First, the present disclosure provides an update notification method and related browser. Because web pages are directly monitored through the browser, a variety of web pages, including the ones not supporting RSS output, can be dynamically monitored, and users can be notified actively and timely through multiple ways after the monitored web pages are updated.

Second, according to the present invention, the functionality of dynamically monitoring update information of network resources may be implemented by a browser. Thus, when a user uses the browser, the user not only can dynamically monitor his/her interested network resources conveniently, but also can timely read the updated contents of these network resources. Further, when the user is interested in subscribing certain web pages, the user does not need to simultaneously open both RSS reader and a browser (two client-side tools) in order to subscribe the web pages and read updated contents. Furthermore, the original favorites-folder of the browser can be used to notify the user of updates from web pages interested by the user, which makes it significantly convenient for the user to use the disclosed methods.

Further, the browser according to the present invention can notify a user using multiple ways when the update information from the network resources being dynamically monitored meets certain update-notification conditions. Afterwards, when the user read updated network resources, the browser can display the updated contents to the user through many formats to meet the individual needs of users. Moreover, the update notification messages can be sent to mobile terminals using communication software tools, and the user can timely receive update notification even when the user does not sit in front of a computer. Thus, the scope of applications of this invention can be broadened.

### Description of the Drawings

To more clearly illustrate embodiments of the present invention or certain prior art, the followings are brief introductions of accompanying drawings needed in describing the embodiments of the present invention or certain prior art. Obviously, the drawings described below only illustrate certain embodiments, for those with ordinary skill in the art, other drawings may be obtained based on the described drawings without any creative work.

Figure 1 is a summary flow chart of the disclosed update notification method of the present invention;

Figure 2 is a specific flow chart of the disclosed update notification method of the present invention;

Figure 3 is a summary block diagram of a browser according to the present invention;

Figure 4 is a specific block diagram of a browser according to the present invention.

### Detailed Embodiments

The present invention provides a webpage update notification method and related browser. Because web pages are directly monitored through the browser, various network resources, including those web pages not supporting RSS output, can be dynamically monitored. The user can then be actively notified using a various ways after the monitored network resources are updated. To better understand the above-mentioned objectives, features and advantages of the present invention, the followings further provide detailed illustrations of the present invention in combination with the drawings and detailed embodiments.

To facilitate understanding, the terms used in this disclosure are explained as follows:

HTML, HyperText Markup Language, is currently the most widely used language on the Internet, and is also a main language for webpage documents.

DOM, Document Object Model, is a browser, platform, and language-neutral interface that can be used to access other standard components of web pages.

Network resources include various resources that can be identified and analyzed by a browser and its plug-ins, such as web pages, videos, audios, and pictures, etc.

Specific contents refer to information in a network resource interested by a user and may include part or all of the information in the network resource. It is understood that, because of the ever-changing forms of network resources, the standard for the specific contents may be flexible. As long as interested by the user, any content can be considered as the specific content of the network resources. For example, if a certain user is interested in an advertisement at a certain location of a certain network resource, such advertisement can also be considered as the specific content of the network resource, while, in general, HTML tag sets and large amount of advertisements and navigation information in the network resources are considered as non-specific contents.

Specific areas and specific elements are ways to extract specific contents. That is, by obtaining specific area(s) of a network resource, the contents of the specific areas can be obtained as the specific contents of the network resource; or by obtaining specific element(s) of a network resource, the contents of the corresponding specific elements can be obtained as the specific contents of the network resource. A specific element may be any element of a network resource or a collection of multiple elements, and the multiple elements may be presented in different forms, e.g., in a discrete form or in a contiguous form. A specific area may be any area of the network resource or multiple areas of the network resource. When a specific area is a single area in the network resource and the area is small enough as only fitting one element, the specific area is equivalent to a specific element in the network resource. On the other hand, when a specific element is a collection of multiple elements contiguously formed together into an area, the specific element is equivalent to a specific area.

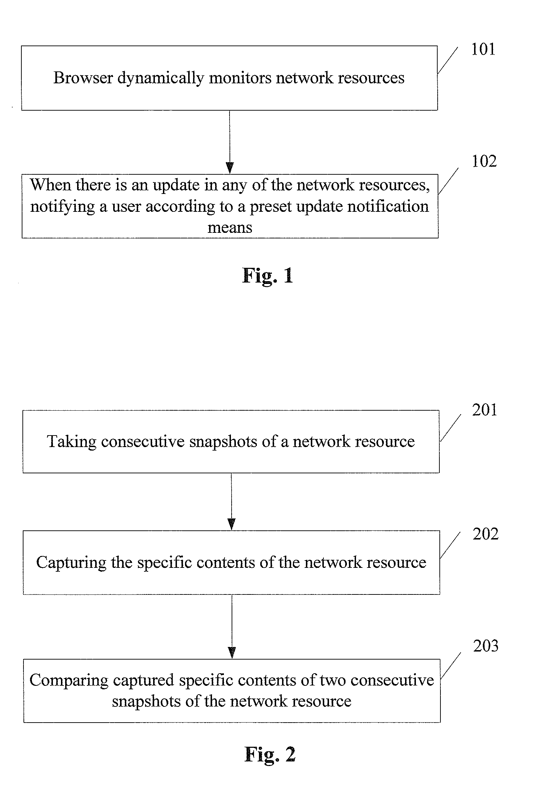

Figure 1 shows a summary flow chart of the disclosed update notification method of the present invention, the method includes the followings:

Step 101, the browser dynamically monitors of a network resource or network resources;

More specifically, the browser dynamically monitors update information of the network resources by taking snap-shots (i.e., capturing contents at a certain point of time) and comparing the contents of the snap-shots of the same network resource, which, as shown in Figure 2, includes the followings:

S201, taking snapshots of the same network resource;

Further, the browser may be triggered to take consecutive snapshots of the same network resource and the triggering mechanisms may include a periodic trigger and an immediate trigger, further explained as follows:

Trigger mechanism one, a periodic trigger using a preset time interval.

The time interval may be set uniformly within the system (e.g., the browser) for all network resources to be dynamically monitored, or may be set separately within the system for the network resources to be dynamically monitored based on attributes of individual network resources. Further, the time interval can also be set by users according to their preferences.

Trigger mechanism two, an immediate trigger according to one or more updating instructions from the user.

The updating instructions may include one or more of: instructions opening the browser by the user, instructions closing the browser by the user, and/or instructions using the browser by the user, etc. Instructions using the browser may include: opening the menu bar, the sidebar; opening history, the most frequently visited record, the most recently visited record; opening the favorites folder; opening the address bar drop-down list; and opening the network resource dynamically monitored, etc.

In addition, dynamically monitoring the network resources by the browser can include: dynamically monitoring update information of the network resources that need to be dynamically monitored listed in the browser's favorites folder; dynamically monitoring update information of the network resources that need to be dynamically monitored listed in the browser's address bar drop-down list; and/or dynamically monitoring update information of the network resources that need to be dynamically monitored pointed to by a web address entered in the browser's address bar. In other words, the browser may by default treat all the network resources listed in the favorites folder or in the address bar as the network resources to be dynamically monitored, or the browser may determine network resources to be dynamically monitored based on received one or more user instructions, such as prompting the user when the user is storing a network resource into the favorites folder for the user to choose whether to specify this network resource as a network resource to be dynamically monitored. In addition, based on preset rules, the browser can also automatically analyze the favorites folder and the address bar to determine which network resources to be dynamically monitored, such as web pages of blogs. The browser will then dynamically monitor the determined network resources. When any update in any of these network resources reaches a predetermined condition (the predetermined condition may be set by the browser or set by users), the user can be notified or prompted. That is, various specific ways may be used to determine which network resources to be dynamically monitored by the browser for changes in contents, and to notify the user when the predetermined notification condition is met.

S202, capturing specific contents of individual network resources;

In implementation, document object model or other models with similar functionalities based on HTML source code of the network resources, or the HTML source code directly, can be used to capture specific contents of the network resources. Further, various ways may be used to capture the specific contents of the network resources. For example, the specific contents may be captured through specific areas of the network resources, or may be captured through specific elements of the network resources.

More specifically, obtaining the specific areas through the document object model may be realized in various ways. The specific areas of network resources can be obtained through certain specific-area determination methods, or can be obtained through a user-defined method. Further, the browser may determine whether there is a user-defined method to obtain the specific areas. If there is a user-defined method, the specific areas of the network resource are obtained using the user-defined method; if there is no user-defined method, the specific areas of the network resources are then obtained through the certain specific-area determination methods. Additionally, the browser may first determine whether there is a user-defined method to obtain the specific areas. If there is a user-defined method, the specific areas of the network resource are obtained using the user-defined method; if there is no user-defined method, the browser may search a database to find specific areas matching the URL of the network resources. If specific areas matching the URL of the network resources cannot be found, the specific areas of the network resources are then obtained through the certain specific-area determination methods.

Obtaining the specific elements can also be realized in various ways. For example, the specific elements may be obtained through the document object model. More specifically, obtaining the specific elements of the network resource through the document object model may include: obtaining coordinates of elements of the network resource as identified by the user; marking the obtained coordinates in the document object model of the network resource; and finding the specific elements of the network resources through node information in the marked document object model. Further, the specific elements can also be searched based on the ID, name, or style of the elements of the network resource as specified by the user. More particularly, the ID, name, or style (e.g., bold font, color, etc.) of a specific element is first obtained using a system function, and the specific element and other attributes, such as text, size, width, and height, etc. (not all specific elements have such attribute information, and even when a specific element has multiple attributes, only the attributes interested by the user need to be obtained), can be obtained based on the ID, name, or style of the specific element. Further, the ID and attribute information of the specific element can be saved. Of course, the system can also automatically analyze the specific elements of network resources.

S203, comparing the specific contents of two consecutive snapshots of the network resource.

More particularly, the specific contents of two consecutive snapshots of the network resource are compared based on the HTML source code of the network resource. Or the specific contents of two consecutive snapshots of the network resource are compared based on the corresponding document object model of the network resource.

Step 102, if there is any update from the monitored network resources, notifying the user according to a preset notification means.

Preferred, when there is any update from the monitored network resource, it is further determined whether the update information meets a pre-determined update notification condition. If the update information meets the condition, the user is notified according to a preset notification means. Otherwise, the user is not notified. Of course, the further determination may be omitted and, as long as there is any update from the monitored network resources, the user is notified according to the preset notification means no matter what the update is. The update notification condition includes but not limited to one or more of: the total number of changed words in the network resource exceeds a certain threshold value, the changed portion in the network resource contains picture(s) (picture changes), the changed portion in the network resource contains link(s) (link changes), the changed portion in the network resource contains key word(s), the changed portion in the network resource contains multi-media file(s), and/or the changed portion in the network resource contains downloadable file(s) (such as RAR files, etc.), etc.

In addition, the update notification means may be set by the browser automatically, or may be set by the user. More particularly, the update notification means can be separated into different categories according to different attributes. The attributes may include: shape, position, content, and effect. The shape may include one or more of dialog boxes, bubbles, and labels. The position may include one or more of: menu bar, side bar, address bar; history, the most frequently visited record, the most recently visited record; the favorites folder; the current page, and a blank page. The content may include one or more of: title, address, introduction, updating time, and invalid web page. The effect may include one or more of: the colors, highlighting, and flashing of texts, and audio.

For example, when the user opens or closes the browser, if there is a change in a webpage that needs to be dynamically monitored, a dialog box can be popped up at any location to indicate a part or entire of the website or webpage has been updated. Further, a notification message inside the dialog box can be just simple texts, such as "updated," more complex texts containing relevant information such as introductions of the updated website(s), or a combination of texts notification and corresponding audio notification.

Also for example, when the user opens the menu bar or the sidebar, or sets options in an option or other column, if there are changes in web pages that need to be dynamically monitored, a bubble can be used at any location to display a part or all of the updated contents. The texts inside the bubble can be different colors, highlighting, flashing, or audio to notify the user with different effects.

Also for example, when the user opens a list of the browser's browsing history, the most frequently visited record, or the most recently visited record, if there are changes in web pages that need to be dynamically monitored, a bubble can be used on the corresponding URL entries to display notification. The contents of the notification can be a part or all of the updated contents, or can be just simple text notification. The updated entries in the list can be displayed with different effects, such as different colors, highlighting, or flashing, to facilitate timely access by the user.

When the user clicks a drop-down list on the address bar, if there are changes in web pages that need to be dynamically monitored, a label can be used on the corresponding URL entries to display notification. Or, when the user opens a web page in the browser, if the web page is one being dynamically monitored and there are changes in the web page, a dialog box, bubble, or label, etc., can be used to notify the user.

It is understood that the above exemplary notification methods are not exhaustive, those skilled in the art can expand or revise these methods to create other different notification methods, such as by different combinations of attributes. Any method capable of notifying the user that a part or all of the websites or web pages are updated can be one of the notification methods. For example, for an already-opened web page not currently visible or an already-opened window not currently visible, the browser can notify updated web pages, or jump directly to the front visible area to notify the user. That is, through one or more of dialog boxes, bubbles, labels, and audios, update notification can be provided within the browser interface or within the terminal interface and in an area outside the browser interface. In addition, the notification methods may also include communication software tools (i.e., third-party tools) to send notification messages to a mobile terminal, such that the user with the mobile terminal can receive update notification even when it is not convenient to sit in front of a computer or other fixed terminals. It should be noted that the third-party tools can include the E-mail, IM and other communication tools.

In addition, it should be noted that, the contents of the notification can be set to all or part of the updated contents, or can be a simple text notification. Updated entries in a list can be displayed using different colors, highlighting, or flashing to facilitate timely access by the user. If there are multiple updated entries, and the user only reads some of the multiple entries, the browser can be configured to notify or not to notify the user those entries unread by the user. For example, if there are 10 updated entries, and the user only reads 9 of them, the user can be notified next time, or the user may be no longer notified.

Further, when the user receives an update notification and clicks on the notification to read, the notification method can further include: receiving the instruction from the user for reading the corresponding network resource; making the display noticeable, such as highlighting, for the specific changed contents of the network resource; and displaying the processed contents of the network resource to the user. More particularly, the making the display noticeable for the specific changed contents of the network resource includes: in case of newly added contents, making display noticeable for the added contents of the network resource; in case of all or part of contents being modified, making display noticeable for the modified contents in the changed network resource (after the modification); and in case of removed contents, making display noticeable for the removed contents of previous network resource (before the removal).

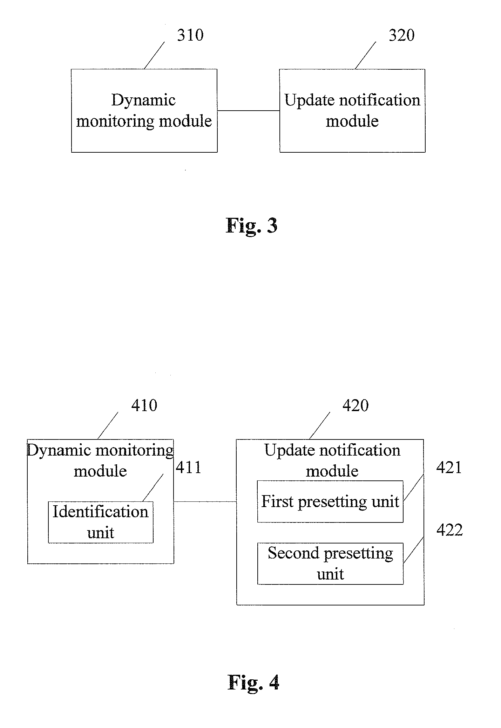

Figure 3 shows an illustrative block diagram of a browser according to the present invention. The system includes: a dynamic monitoring module 310, and update notification module 320.

Dynamic monitoring module 310 may be used for dynamically monitoring network resources. More particularly, dynamic monitoring module 310, through taking consecutive snapshots of the same network resource and comparing the contents of the consecutive snapshots, dynamically monitors update information of the network resource. Further, when dynamic monitoring module 310 takes the snapshots, dynamic monitoring module 310 may periodically take the consecutive snapshots of the same network resource based on a preset time interval, or dynamic monitoring module 310 may take the consecutive snapshots of the same network resource based on updating instructions from the user. The updating instructions from the user include: instructions opening the browser by the user, instructions closing the browser by the user, and/or instructions using the browser by the user, etc.

Update notification module 320 may be used to notify the user according to a preset update notification means when dynamic monitoring module 310 detects updating from the monitored network resource. The update notification means may be set by received user configuration instructions, or may be set by the system (e.g., browser) automatically. The update notification means includes: providing update notification within the browser interface through one or more of dialog boxes, bubbles, labels, audios, and other shapes; providing update notification within the terminal interface and in an area outside the browser interface through one or more of dialog boxes, bubbles, labels, audios, and other shapes; or sending update notification to mobile terminals through communication software tools.

Figure 4 shows an illustrative structural diagram of a browser according to the present invention. The system includes: dynamic monitoring module 410, and update notification module 420.

Dynamic monitoring module 410 may be used for dynamically monitoring network resources. More particularly, dynamic monitoring module 410, through taking consecutive snapshots of the same network resource and comparing the contents of the consecutive snapshots, dynamically monitors update information of the network resource. Further, dynamic monitoring module 410 includes an identification unit 411, which is used to identify the network resources to be dynamically monitored based on one or more instructions specifying network resources need to be dynamically monitored received from the user or to identify the network resources to be monitored based on analysis using preset rules. Thus, based on the identified network resources to be monitored from the identification unit 411, the dynamic monitoring module 410 can dynamically monitor update information of network resources to be dynamically monitored in the browser's favorites folder, dynamically monitor network resources to be dynamically monitored in the browser's address-bar drop-down list, and dynamically monitor network resources to be dynamically monitored pointed to by the web addresses entered into the browser's address bar, etc.

In addition, dynamic monitoring module 410 can also dynamically monitor update information of specific contents of network resources. More particularly, dynamic monitoring module 410 first takes consecutive snapshots of the monitored network resource, captures specific contents of the snapshots, and compares the specific contents of the consecutive snapshots of the network resource.

Update notification module 420 may be used to notify the user according to a preset update notification means when dynamic monitoring module 410 detects updating from the monitored network resource. The update notification means may be set by received user configuration instructions, or may be set by the system (e.g., browser) automatically. Further, update notification module 420 may include a first presetting unit 421, which is used to preset one or more update notification conditions. The preset update-notification conditions include: the total number of changed words in the network resource exceeds a certain threshold, the changed portion in network resource contains pictures (picture changes), the changed portion in network resource contains links (link changes), the changed portion in network resource contains key words, and/or the changed portion in network resource contains multi-media files. Thus, when monitored network resources have any updates and the update information meets any of the update-notification conditions preset by the first presetting unit 421, the update notification module 420 notifies the user according to a preset update-notification means.

In addition, the update notification module 420 may include a second presetting unit 422, which is used to preset the update-notification means based on one or more received user configuration instructions, or to preset the update-notification means automatically. The update notification means may include: providing update notification within the browser interface through one or more of dialog boxes, bubbles, labels, audios, and other shapes; providing update notification within the terminal interface and in an area outside the browser interface through one or more of dialog boxes, bubbles, labels, audios, and other shapes; or sending update notification to mobile terminals through communication software tools.

Therefore, the present disclosure provides a new update notification method and related browser. Because web pages are directly monitored through the browser, a variety of web pages, including the ones not supporting RSS output, can be dynamically monitored, and users can be notified actively and timely through multiple ways after the monitored web pages are updated. According to the present invention, the functionality of dynamically monitoring update information of network resources may be implemented by a browser. Thus, when a user uses the browser, the user not only can dynamically monitor his/her interested network resources conveniently, but also can timely read the updated contents of these network resources. Further, when the user is interested in subscribing certain web pages, the user does not need to simultaneously open both RSS reader and a browser (two client-side tools) in order to subscribe the web pages and read updated contents. Furthermore, the original favorites-folder of the browser can be used to notify the user of updates from web pages interested by the user, which makes it significantly convenient for the user to use the disclosed methods. In addition, the browser according to the present invention can notify users using multiple ways when the update information from the network resources being dynamically monitored meets certain update-notification conditions. Afterwards, when users read updated network resources, the browser can display the updated contents to the user through many formats to meet the individual needs of users. Moreover, the update notification messages can be sent to mobile terminals using communication software tools, and the user can timely receive update notification even when the user does not sit in front of a computer. Thus, the scope of applications of this invention can be broadened.

Those with ordinary skill in the art can understand that part or all of the steps of the above embodiments may be implemented using programs to instruct related hardware, and the program cans be stored in a computer-readable storage medium, when being executed, including one or a combination of the steps of the disclosed methods. For example, embodiments of the present invention provide a computer-readable storage medium including computer program codes, when being executed by a computer unit, instructing the computer unit to perform: dynamically monitoring network resources; notifying a user according to preset update-notification means if the monitored network resources are updated.

In addition, the various functional units in various embodiments of the invention can be integrated in a processing module. Each unit can be a separate physical existence, or two or more units can be integrated into a single module. For example, the updating subsystem and notification subsystem in the embodiments of the invention mentioned above can be used at the browsers' client side as one system, and can also be used as two independent systems at the browser's client side at the same time or at different times to perform their respective functions. The integrated module can be implemented in the form of hardware or in the form of software functional modules. If the integrated module is implemented in the form of software functional modules and is sold or used as an independent product, it can also be stored in a computer-readable storage medium.

The above-mentioned storage medium can be read-only memory, disk or CD-ROM.

The systems and methods described in the present invention can be applicable to a variety of network or client terminal environment, such as computer equipment including personal computer equipment and the like, or mobile phones, mobile communications equipment, personal digital assistant (PDA) and other electronic equipment.

The above detailed descriptions illustrate an update notification method and related browser provided by the present invention. Individual examples are used to illustrate the principle and implementation of the present invention. However, the embodiments are only used to help understanding implementations of the present invention. Also, for those with ordinary skill in the art, particular implementations and application scopes may be changed based on the principles of the present invention. In summary, the contents of this specification should not be interpreted as any limitation to the present invention.

## Claims

1. An update notification method, **characterized by**, comprising:
dynamically monitoring network resources by a browser;
when there is an update in any of the network resources, notifying a user according to a preset update notification means.

2. The method according to claim 1, **characterized by**, wherein dynamically monitoring the network resources includes:
dynamically monitoring update information of the network resources by the browser through taking consecutive snapshots of a same network resource and comparing contents of the consecutive snapshots.

3. The method according to claim 2, **characterized by**, wherein taking consecutive snapshots of the same network resource includes:
taking the consecutive snapshots of the same network resource periodically based on a preset time interval; and/or
taking the consecutive snapshots of the same network resource based on an updating instruction from the user.

4. The method according to claim 3, **characterized by**, wherein the updating instruction includes one or more of:
an instruction opening the browser by the user, an instruction closing the browser by the user, and an instruction using the browser by the user.

5. The method according to claim 1, **characterized by**, further including:
receiving from the user by the browser a specifying instruction to identify network resources to be dynamically monitored, and/or identifying by the browser automatically network resources to be dynamically monitored based on analysis using preset rules.

6. The method according to claim 1, **characterized by**, wherein dynamically monitoring the network resources by the browser includes:
dynamically monitoring update information of network resources that need to be dynamically monitored listed in the browser's favorites folder; and/or
dynamically monitoring the update information of the network resources that need to be dynamically monitored listed in the browser's address bar drop-down list; and/or
dynamically monitoring the update information of the network resources that need to be dynamically monitored pointed to by a web address entered in the browser's address bar.

7. The method according to claim 1, **characterized by**, wherein dynamically monitoring the network resources by the browser includes:
dynamically monitoring update information of specific contents of the network resources.

8. The method according to claim 1, **characterized by**, wherein, when there is an update in any of the network resources, notifying the user according to the preset update notification means includes:
when there is an update in any of the network resources and corresponding update information meets a preset update notification condition, notifying the user according to the preset update notification means.

9. The method according to claim 8, **characterized by**, wherein the preset update notification condition includes:
a total number of changed words in a network resource exceeding a certain threshold value, and/or
a changed portion in the network resource containing a picture, and/or
the changed portion in the network resource containing a link, and/or
the changed portion in the network resource containing a key word, and/or
the changed portion in the network resource containing a multi-media file, and/or
the changed portion in the network resource containing a downloadable file.

10. The method according to claim 1, **characterized by**, wherein the preset update notification means includes:
update notification means automatically set by the browser, or
update notification means set by the user.

11. The method according to claim 1, **characterized by**, wherein the preset update notification means includes:
providing update notification within a browser interface through one or more of a dialog box, a bubble, a label, and an audio; or
providing the update notification within a terminal interface and in an area outside the browser interface through one or more of a dialog box, a bubble, a label, and an audio; or
sending the update notification to a mobile terminal through communication software tools.

12. A browser, **characterized by**, comprising:
a dynamic monitoring module, which is used for dynamically monitoring network resources;
an update notification module, which is used for, when dynamic monitoring module detects updating from the monitored network resources, notifying a user according to a preset update notification means.

13. The browser according to claim 12, **characterized by**, wherein the dynamic monitoring module dynamically monitors update information of the network resources through taking consecutive snapshots of a same network resource and comparing contents of the consecutive snapshots.

14. The browser according to claim 13, **characterized by**, wherein taking consecutive snapshots of the same network resource by the dynamic monitoring module includes:
taking the consecutive snapshots of the same network resource periodically based on a preset time interval; and/or
taking the consecutive snapshots of the same network resource based on an updating instruction from the user.

15. The browser according to claim 14, **characterized by**, wherein the updating instruction includes one or more of:
an instruction opening the browser by the user, an instruction closing the browser by the user, and an instruction using the browser by the user.

16. The browser according to claim 12, **characterized by**, wherein the dynamic monitoring module further includes:
an identification unit, which is used to identify network resources to be dynamically monitored based on an instruction specifying network resources that need to be dynamically monitored received from the user, and/or to identify the network resources to be monitored based on analysis using preset rules;
the dynamic monitoring module dynamically monitors update information of network resources to be dynamically monitored as identified by the identification unit.

17. The browser according to claim 12, **characterized by**, wherein the dynamic monitoring module dynamically monitors update information of network resources that need to be dynamically monitored listed in the browser's favorites folder; and/or
dynamically monitors the update information of the network resources that need to be dynamically monitored listed in the browser's address bar drop-down list; and/or
dynamically monitors the update information of the network resources that need to be dynamically monitored pointed to by a web address entered in the browser's address bar.

18. The browser according to claim 12, **characterized by**, wherein the dynamic monitoring module dynamically monitors update information of specific contents of the network resources.

19. The browser according to claim 12, **characterized by**, wherein the update notification module includes a first presetting unit used to preset an update notification condition;
when the dynamic monitoring module detects updating from the network resources and corresponding update information meets the update notification condition preset by the first presetting unit, the update notification module notifies the user according to the preset update notification means.

20. The browser according to claim 19, **characterized by**, wherein the preset update notification condition includes:
a total number of changed words in a network resource exceeding a certain threshold value, and/or
a changed portion in the network resource containing a picture, and/or
the changed portion in the network resource containing a link, and/or
the changed portion in the network resource containing a key word, and/or
the changed portion in the network resource containing a multi-media file, and/or
the changed portion in the network resource containing a downloadable file.

21. The browser according to claim 12, **characterized by**, wherein the update notification module includes a second presetting unit used to preset an update notification means based on a received user configuration instruction, and/or to preset the update notification means automatically.

22. The browser according to claim 12, **characterized by**, wherein the preset update notification means includes:
providing update notification within a browser interface through one or more of a dialog box, a bubble, a label, and an audio; or
providing the update notification within a terminal interface and in an area outside the browser interface through one or more of a dialog box, a bubble, a label, and an audio; or
sending the update notification to a mobile terminal through communication software tools.

23. A computer-readable storage medium, **characterized by**, including computer program code, when being executed by a computer unit, instructing the computer unit to:
dynamically monitor network resources;
when there is an update in any of the network resources, notify a user according to a preset update notification means.
